# EUROPEAN PATENT APPLICATION

(11) **EP 3 477 348 A1**
(43) Date of publication of application: **01.05.2019**
(21) Application number: 17819963.4
(22) Date of filing: 20.06.2017
(51) Int. Cl.: G02B 6/02, G02B 6/42, H01S 3/10

(54) **OPTICAL DEVICE AND LASER DEVICE**

(30) Priority: 28.06.2016 JP 2016128067
(71) Applicant: Fujikura Ltd., Tokyo 135-8512 (JP)
(72) Inventor: TANAKA Hironori, Sakura-shi Chiba 285-8550 (JP)
(74) Representative: Cabinet Plasseraud
(86) International application number: PCT/JP2017/022696
(87) International publication number: WO 2018/003604

(57) **Abstract**

This optical device comprises: a first fiber 31 having a core 31a and cladding 31b that surrounds the outer periphery of the core 31a, a second fiber 32 having a core 32a and cladding 32b that surrounds the outer periphery of the core 32a and having one end face 32fb connected to one end face 31fa of the first fiber 31, and a quartz block 35 connected to the other end face 32fa of the second fiber 32. The other end face 32fa of the second fiber 32 is smaller than the face 35fb of the quartz block connected to the second fiber 32, and larger than the one end face 31fa of the first fiber 31.

## Description

### Technical Field

The present invention relates to an optical device and a laser device including the optical device.

### Background Art

Fiber laser devices are used in various fields such as the laser processing field and the medical field because the fiber laser devices have excellent focusing ability and high power density and can provide light with a small beam spot.

A fiber laser device propagates a high power laser light output from an oscillator to an optical fiber and emits the laser light, and thereby applying the laser light to a target irradiation position. The structure of an emission end for laser light in such a fiber laser device is disclosed in, for example, Patent Literature 1 below. In the fiber laser device disclosed in Patent Literature 1 below, an end face of an optical fiber that propagates laser light is fusion-spliced to a quartz block (disk) at the emission end for the laser light. An outer diameter of the quartz block is sufficiently larger than the outer diameter of the fusion-spliced optical fiber.

[Patent Literature 1] JP 2000-514930 A

### Summary of Invention

In the fiber laser device as described above, the laser light emitted from the optical fiber is made to enter the quartz block and propagates through the quartz block while spreading according to the numerical aperture, whereby the beam density is reduced. Hereinafter, the surface of the quartz block to which the optical fiber is connected is referred to as an incidence surface, and the surface opposite to the incidence surface is referred to as an emission surface in some cases. The laser light emitted from the emission surface of the quartz block is condensed by being passed through a machining head having a condenser lens and is applied to a workpiece. The laser light applied to the workpiece is absorbed by the workpiece and thus becomes heat to contribute to machining.

However, a part of the laser light applied to the workpiece is reflected by the surface of the workpiece, and a part of the reflected light may enter the quartz block. In the case where the laser light ideally converged at a processing point is perpendicularly incident on the surface of the workpiece and is vertically reflected, the reflected light is converged again by the machining head and is coupled again to the optical fiber connected, on an incidence surface side of the quartz block, to the quartz block. In fact, however, ideal focusing is difficult due to lens aberrations and a thermal lens effect of the machining head. Further, since the surface of the workpiece generally has minute irregularities and inclined faces, the reflected light which is reflected by the surface of the workpiece and returns to the quartz block side may be converged at a position other than the position, to which the optical fiber is connected, on the incidence surface.

The inventor of the present invention has found that there may be problems such as deteriorating characteristics of the laser device when the reflected light is converged, as described above, at a position other than the position, to which the optical fiber is connected, on the incidence surface of the quartz block, and the reflected light heats the quartz block.

To address this issue, an object of the present invention is to provide an optical device which can prevent or reduce deterioration of characteristics due to reflected light in a laser device and to provide a laser device including the optical device.

An optical device of the present invention includes: a first fiber having a core and a clad surrounding an outer periphery of the core; and a second fiber having a core and a clad surrounding an outer periphery of the core, wherein one end face of the first fiber is connected to one end face of the second fiber; and a quartz block connected to the other end face of the second fiber. The other end face of the second fiber is smaller than a surface of the quartz block, to which the second fiber is connected, and is larger than the one end face of the first fiber.

Further, a laser device of the present invention includes at least one light source, an optical fiber which propagates light emitted from the light source, and the above optical device provided at an emission end of the optical fiber.

In a laser device, the optical fiber for transmitting laser light is preferably thin to some extent from the viewpoint of easy handling and other reasons. At the emission end of the conventional laser device, an optical fiber formed thin as described above and a quartz block are directly connected. That is, at the emission end of the conventional laser device, the optical fiber corresponding to the first fiber in the above optical device and the quartz block are directly connected. In contrast, in the above optical device, the second fiber is provided between the first fiber and the quartz block. The end face of the second fiber connected to the quartz block is larger than the end face of the first fiber. Therefore, compared with the case where the first fiber is connected to the quartz block without using the second fiber therebetween, it is easy for the laser light emitted from the laser device and reflected by the surface of the workpiece to enter the optical fiber (second fiber). As a result, it is possible to prevent or reduce heating of the quartz block by the reflected light, and it is possible to prevent or reduce deterioration of the characteristics of the laser device due to the quartz block being heated. Further, since the outer diameters is smaller in order from the quartz block to the second fiber and the first fiber, it is possible to handle the reflected light in a step-by-step manner while dispersing the power density of the reflected light entering the quartz block. Further, since the quartz block, the second fiber, and the first fiber are connected in sequence, the differences between the outer diameters of the members to be connected are smaller, whereby the heat capacity differences can be smaller when the members are fusion-spliced. As a result, it is possible to prevent or reduce bending of the cores of the first fiber and the second fiber when the first fiber and the second fiber are fusion-spliced, and it is thus possible to prevent or reduce deterioration of beam quality due to the bending of the cores of the first fiber and the second fiber.

Further, it is preferable that the second fiber cause the light propagating through the clad of the second fiber to emit through the outer peripheral surface.

The laser light emitted from the laser device and reflected by the surface of the workpiece may enter the clad of the second fiber and become clad mode light propagating through the clad. By configuring the second fiber so that the light propagating through the clad can be emitted through the outer peripheral surface, it is possible to cause the clad mode light as described above to be emitted through the outer peripheral surface. By intentionally causing the clad mode light as described above to be emitted, it is easy to dissipate the heat due to the clad mode light by an appropriate manner.

It is preferable that the clad of the second fiber have on the outer peripheral surface a groove extending not parallel to the longitudinal direction.

By forming the groove not parallel to the longitudinal direction on the outer peripheral surface of the clad of the second fiber, it is possible to cause a part of the clad mode light incident on the side surface of the groove to be emitted to the outside of the clad, and it is therefore easy to cause the clad mode light to be emitted from the second fiber to the outside.

It is preferable that the outer diameter of the part of the clad of the second fiber, in which the groove is formed, be smaller than the outer diameter of the clad of the first fiber.

The end face of the second fiber connected to the quartz block is made larger than the end face of the first fiber as described above, so that a larger amount of reflected light can be entered into the optical fiber (the second fiber) than in the case where the first fiber is directly connected to the quartz block. However, if the clad of the optical fiber is thick, it is difficult to cause the clad mode light to be emitted through the outer peripheral surface. To address this issue, the end face of the second fiber is made larger than the end face of the first fiber, and the outer diameter of the second fiber is made partially smaller than the first fiber by forming the groove, so that the reflected light can be easily entered into the clad of the second fiber, and it is possible to cause the clad mode light to be emitted to the outside of the clad of the second fiber equally to the case where the outer diameter of the clad of the second fiber is as thin as the outer diameter of the clad of the first fiber.

It is preferable that at least a part of the outer peripheral surface of the clad of the second fiber be covered with a high refractive index layer having a refractive index higher than the refractive index of the clad of the second fiber.

Since the clad of the second fiber is covered with the high refractive index layer, the clad mode light easily enters the high refractive index layer from the clad, so that it is easy to cause the clad mode light to be emitted to the outside of the second fiber through the high refractive index layer.

Further, the following configuration is preferable. The one end face of the second fiber is larger than the one end face of the first fiber. The part, of the one end face of the second fiber, not contact with the first fiber, is covered with resin which transmits at least light having the same wavelength as that of the light propagating through the second fiber. The resin is in contact with a member which absorbs light having the same wavelength as that of the light propagating through the second fiber.

When the end face of the second fiber is covered with the resin and the resin is in contact with the light absorbing member as described above, the reflected light arriving at the part, of the end face of the second fiber, not in contact with the first fiber can be transmitted to the light absorbing member through the resin. Further, the reflected light transmitted to the light absorbing member is converted into heat and is discharged outside the optical device, so that it is possible to prevent or reduce heating of the optical device by the reflected light. Further, when the end face of the second fiber is covered with the resin as described above, it is possible to prevent or reduce contamination of the end face, whereby it is possible to prevent or reduce heat generation caused by the contamination on the end face of the second fiber absorbing the clad mode light.

As described above, the present invention provides an optical device which can prevent or reduce deterioration of characteristics due to reflected light in a laser device, and provides a laser device including the optical device.

### Brief Description of Drawings

FIG. 1 is a conceptual diagram showing a laser device according to an embodiment of the present invention.
FIG. 2 is a cross-sectional view schematically showing the optical device shown in FIG. 1.
FIG. 3 is a cross-sectional view schematically showing the first fiber, the second fiber, and the quartz block shown in FIG. 2.
FIG. 4 is a diagram schematically showing a cross-sectional view of a quartz block provided in a conventional optical device and a part of an optical fiber connected to the quartz block, and an optical path example of reflected light.
FIG. 5 is a diagram schematically showing a cross-sectional view of the quartz block provided in the conventional optical device and a part of the optical fiber connected to the quartz block, and another optical path example of reflected light.
FIG. 6 is a diagram schematically showing a cross-sectional view of the quartz block provided in the conventional optical device and a part of the optical fiber connected to the quartz block, and still another optical path example of reflected light.
FIG. 7 is a diagram schematically showing a cross-sectional view of the quartz block provided in the conventional optical device and a part of the optical fiber connected to the quartz block, and still another optical path example of reflected light.
FIG. 8 is a diagram schematically showing a cross-sectional view of the quartz block provided in the optical device according to the embodiment of the present invention and a part of the second fiber connected to the quartz block, and an optical path example of reflected light.

### Description of Embodiments

Hereinafter, a preferred embodiment of an optical device and a laser device according to the present invention will be described in detail with reference to the drawings.

### <Laser Device>

First, a configuration of a laser device of the present embodiment will be described.

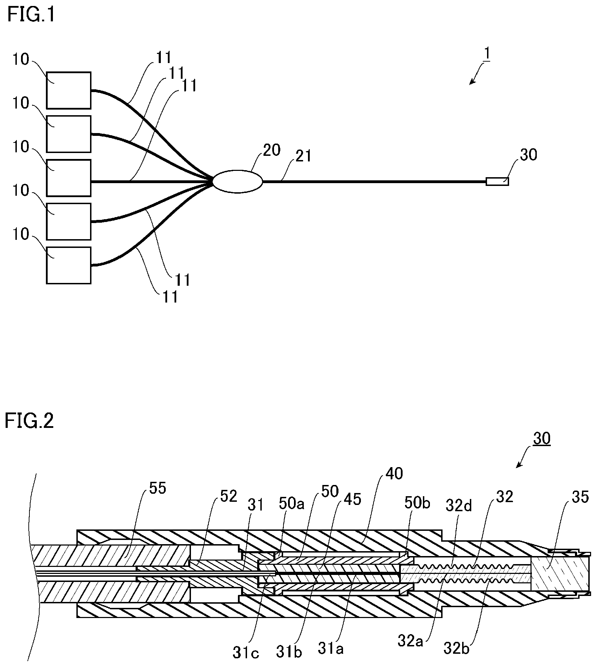

FIG. 1 is a conceptual diagram showing a laser device according to the embodiment of the present invention. As shown in FIG. 1, the laser device 1 of the present embodiment includes, as main components, a plurality of light sources 10, an optical combiner 20, and an optical device 30.

Each of the light sources 10 is a laser device which emits light with a predetermined wavelength and is a fiber laser device or a solid-state laser device, for example. When the light source 10 is a fiber laser device, the light source 10 may be a resonator type fiber laser device or a Master Oscillator Power Amplifier (MO-PA) type fiber laser device. The light emitted from each of the light sources 10 is, for example, light with a wavelength of 1050 nm.

An optical fiber 11 which propagates light emitted from the light source 10 is connected to each of the light sources 10. Each of the optical fibers 11 is, for example, a few-mode fiber having a core diameter of about 20 µm. Therefore, the light emitted from each of the light sources 10 propagates through the respective optical fibers 11 in the LP mode of about 2 to 4.

The optical combiner 20 is a member for connecting the cores of the optical fibers 11 and the core of the optical fiber 21. For example, end faces of the optical fibers 11 and an end face of the optical fiber 21 having a diameter larger than the diameter of the optical fibers 11 are connected, and thereby the optical combiner 20 is constructed. The optical fiber 21 is, for example, a multimode fiber having a core diameter of about 50 µm to 100 µm.

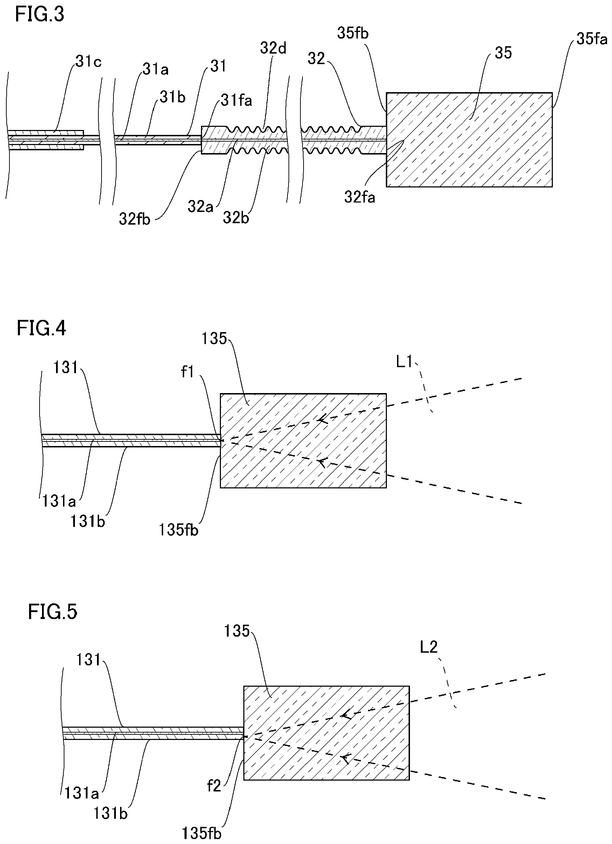

FIG. 2 is a cross-sectional view schematically showing the optical device 30 shown in FIG. 1. The optical device 30 shown in FIG. 2 includes, as main components, a first fiber 31, a second fiber 32, a quartz block 35, a housing 40, and a resin coated part 45. FIG. 3 is an enlarged cross-sectional view showing the first fiber 31, the second fiber 32, and the quartz block 35 shown in FIG. 2.

The first fiber 31 is a part of the optical fiber 21 or is another optical fiber which is connected to the optical fiber 21 and has a configuration similar to the configuration of the optical fiber 21. The first fiber 31 is housed in a cable sheath 55 and has a core 31a, a clad 31b surrounding the core 31a, and a covering layer 31c covering the clad 31b. At an end part of the one end face 31fa side of the first fiber 31, the covering layer 31c is removed in the range of about 20 mm from the end face 31fa. The end face 31fa is connected to the second fiber 32 by fusion splicing. Such a first fiber 31 is, for example, an optical fiber in which a diameter of the core 31a is about 100 µm and an outer diameter of the clad 31b is about 360 µm.

The second fiber 32 is an optical fiber having a core 32a and a clad 32b surrounding the core 32a. One end face 32fb of the second fiber 32 is connected to one end face 31fa of the first fiber 31 by fusion splicing, and the other end face 32fa is connected to the incidence surface 35fb of the quartz block 35 by fusion splicing. The one end face 32fb of the second fiber 32 is larger than the one end face 31fa of the first fiber 31. Therefore, the one end face 32fb of the second fiber 32 has a part not connected to the one end face 31fa of the first fiber 31. The other end face 32fa of the second fiber 32 is smaller than the incidence surface 35fb of the quartz block 35. Therefore, the incidence surface 35fb of the quartz block 35 has a part not connected to the other end face 32fa of the second fiber 32. The outer diameter of the second fiber 32 is substantially constant except a part where a clad mode stripper (to be described later) is formed, and the one end face 32fa and the other end face 32fb of the second fiber 32 are approximately the same in size. Therefore, the other end face 32fa of the second fiber 32 is larger than the one end face 31fa of the first fiber 31.

The clad 32b of the second fiber 32 has, in the outer peripheral surface, grooves 32d provided along the circumferential direction of the second fiber 32. The grooves 32d are formed along the circumferential direction of the second fiber 32, and a plurality of the grooves 32d are arranged side by side along the longitudinal direction of the second fiber 32. These grooves 32d function as a clad mode stripper. That is, by forming the plurality of grooves 32d in the outer peripheral surface of the clad 32b, a part of the clad mode light entering the side surfaces of the grooves 32d is emitted outside the clad 32b. Such grooves 32d can be formed by, for example, CO₂ laser processing or other processing. The grooves 32d can be formed by applying CO₂ laser while the second fiber 32 in which the grooves 32d are not formed is being rotated around the central axis. Further, in the case where the grooves 32d are formed by CO₂ laser as described above, it is possible to prevent or reduce decrease in strength of the second fiber 32 when machining marks are smoothed by fire polishing with an oxyhydrogen burner or the like after the CO₂ laser processing.

The diameter of the core 32a of the second fiber 32 is preferably larger than the diameter of the core 31a of the first fiber 31. The second fiber 32 can be, for example, an optical fiber in which the core 32a has a diameter of about 100 µm, the clad 32b has an outer diameter of about 2 mm, and the length is about 60 mm. In this case, for example, between the positions 5 mm and 45 mm away from the other end face 32fa of the second fiber 32 in the longitudinal direction, 46 grooves 32d are formed along the circumferential direction. Each groove 32d has a depth of about 0.7 mm and is formed at intervals of 1 mm in a range in the longitudinal direction of the second fiber 32. The clad mode stripper is configured with such grooves 32d. Since there is a possibility that reflected light to be described later can be concentrated near a fusion-spliced point at which the second fiber 32 and the quartz block 35 are fusion spliced, it is preferable that the grooves 32d be formed a predetermined distance away from the fusion-spliced point. Therefore, as in the above example, it is preferable not to form the grooves 32d at positions up to about 5 mm from the end face 32fa of the second fiber 32 on the quartz block 35 side.

Further, from the viewpoint of making it easy for the clad mode light to be incident on the side surfaces of the grooves 32d, it is preferable that the grooves 32d be deep. However, the diameter of the second fiber 32 at the part where the grooves 32d are formed is preferably five times the diameter of the core 32a or more. By making, as described above, the diameter of the second fiber 32 thick to a certain extent on the part where the grooves 32d are formed, it is possible to prevent or reduce distortion of the core 32a due to heat when processing to form the grooves 32d is performed, and it is thus possible to prevent or reduce deterioration of the quality of the beam propagating through the core 32a. Therefore, for example, in a case where the outer diameter of the second fiber 32 on the part where the grooves 32d are not formed is 2 mm, and the diameter of the core 32a is 100 µm, the depth of the grooves 32d is preferably set to 750 µm or less, and the diameter of the second fiber 32 on the part where the grooves 32d are formed is preferably set to 500 µm or more.

The quartz block 35 is a columnar body made of glass. The quartz block 35 can be, for example, a columnar body made of synthetic quartz having a diameter of about 8 mm and a length of about 23 mm. To the incidence surface 35fb which is one surface of the quartz block 35, an end face 32fa, of the second fiber 32, on the side opposite to the first fiber 31, is connected by fusion splicing with an oxyhydrogen burner or other devices. The end face 32fa of the second fiber 32 connected to the quartz block 35 is smaller than the incidence surface 35fb of the quartz block 35 and larger than the end face 31fa of the first fiber 31 as described above.

The resin coated part 45 is made up of resin which covers a part, of the end face 32fb on the first fiber 31 side of the second fiber 32, not in contact with the first fiber 31 and the outer peripheral surface of the end part on the second fiber 32 side of the first fiber 31. The covering layer 31c is removed at the end part on the second fiber 32 side of the first fiber 31, and at least a part of the clad 31b of the first fiber 31 is covered with the resin coated part 45. As the resin constituting the resin coated part 45, it is preferably to use a resin which transmits at least the light having the same wavelength as that of the light propagating through the second fiber 32. For example, the resin can be a silicone resin and so one.

The housing 40 is a member which houses a part of the first fiber 31, the second fiber 32, and the quartz block 35. The housing 40 is formed in a cylindrical shape. In the hollow part of the housing 40, the first fiber 31, the second fiber 32, and the quartz block 35 are housed. The housing 40 is made of, for example, a metal such as copper, which is excellent in thermal conductivity. The housing 40 may be water-cooled or air-cooled, depending on the power of the laser light emitted from the laser device 1 or the like.

Inside the housing 40, the outer peripheral surface of the quartz block 35 is fixed on the inner peripheral surface of the housing 40 with an adhesive or the like, so that the position of the quartz block 35 is fixed.

Further, in the housing 40, the one end part of the second fiber 32 is fixed by being connected to the quartz block 35, and the other end part of the second fiber 32 is fixed by the first spacer 50. The first spacer 50 is a metal member which fixes the first fiber 31 and the second fiber 32 in the housing 40 and prevents or reduces positional deviation between the first fiber 31 and the second fiber 32 at the fusion-spliced point of the first fiber 31 and the second fiber 32. The first spacer 50 is formed in a cylindrical shape and has protrusions 50a and 50b protruding outward on the outer peripheral surface. In the inner peripheral surface side of the first spacer 50, parts, of the first fiber 31 and the second fiber 32, including the fusion-spliced point between the first fiber 31 and the second fiber 32 are housed. The space between the first fiber 31 and the second fiber 32, and the inner peripheral surface of the first spacer 50 is filled with the resin constituting the resin coated part 45. In this way, the fusion-spliced point between the first fiber 31 and the second fiber 32 is reinforced. In addition, since the first fiber 31 and the second fiber 32 are held by the inner peripheral surface of the first spacer 50 as described above and since the protrusions 50a and 50b are in contact with the inner peripheral surface of the housing 40, the positional deviation of the first fiber 31 and the second fiber 32 is prevented or reduced, and the first fiber 31 and the second fiber 32 are fixed in the housing 40.

In addition, in the housing 40, the end part of the first fiber 31 on the side of the fusion-spliced point with the second fiber 32 is fixed by the first spacer 50 as described above, and the other part of the first fiber 31 is fixed by the second spacer 52. The second spacer 52 is a metal member which prevents or reduces the positional deviation of the first fiber 31. The second spacer 52 is a cylindrical member having a through hole through which the first fiber 31 is inserted. The end part of the second spacer 52 on the side of the second fiber 32is formed to have a large inner diameter and a large outer diameter. The other end part of the second spacer 52 is formed to have a small outer diameter. At the end part of the second spacer 52 where the inner diameter and the outer diameter are large, the inner peripheral surface is in contact with the outer peripheral surface of the end part of the first spacer 50, and the outer peripheral surface is in contact with the inner peripheral surface of the housing 40. On the other hand, the end part formed to have a small outer diameter is inserted into the cable sheath 55 such that the outer peripheral surface is in contact with the inner peripheral surface of the cable sheath 55.

Next, the operation and action of the laser device 1 of the present embodiment will be described.

When light of a predetermined wavelength is emitted from the light sources 10, respective light propagates through the optical fibers 11, is then combined in the optical combiner 20, and is emitted from the optical device 30 via the optical fiber 21. In the optical device 30, the laser light propagates through the core 31a of the first fiber 31 and the core 32a of the second fiber 32, and is emitted through the quartz block 35. The laser light to enter the quartz block 35 propagates through the quartz block 35 while expanding depending on the numerical aperture, is emitted from the emission surface 35fa, is converged by a machining head (not shown), and is applied to a workpiece. The laser light applied to the workpiece is absorbed by the workpiece and thus becomes heat to contribute to machining.

However, a part of the laser light applied to the workpiece is reflected by the surface of the workpiece. A part of the reflected light enters the quartz block 35 in some cases. Hereinafter, a description will be given on the reason why the optical device 30 can prevent or reduce deterioration of characteristics of the laser device 1 to be caused by the above-described reflected light.

First, a description will be given on the cause that the deterioration of the characteristics of the laser device due to the reflected light as described above is caused in the case of using a conventional optical device. FIGS. 4 to 7 are diagrams each schematically showing a cross sectional view of a quartz block 135 provided in a conventional optical device and a part of an optical fiber 131 connected to the quartz block 135, and an example of the optical path of the reflected light.

The quartz block 135 shown in FIGS. 4 to 7 is a member similar to the above quartz block 35. The optical fiber 131 is an optical fiber similar to the first fiber 31 and has a core 131a and a clad 131b surrounding the outer periphery of the core 131a. In the conventional optical device, the optical fiber 131 corresponding to the first fiber 31 is directly connected to the quartz block 135 without passing through an optical fiber corresponding to the second fiber 32. In such an optical device, in the case where the laser light emitted from the quartz block 135 and ideally focused at a processing point is perpendicularly incident on the surface of the workpiece and is orthogonally reflected, the reflected light L1 passes through the optical path as shown in FIG. 4. That is, the reflected light L1 is converged by a machining head (not shown) and forms a focal point f1 on the core 131a of the optical fiber 131 on the incidence surface 135fb side of the quartz block 135. In the case where the reflected light L1 is coupled to the core 131a of the optical fiber 131 again as described above, it is easy to detect the intensity of the reflected light L1. Therefore, it is easy to safely stop the emission of the laser light to prevent trouble in advance. In addition, in this case, the reflected light L1 is hardly converted into heat. Thus, issues such as heat generation by the reflected light L1 are unlikely to occur.

In fact, however, ideal focusing is difficult due to lens aberrations and a thermal lens effect of the machining head and so on. Further, since the surface of the workpiece generally has minute irregularities and inclined faces, the reflected light which is reflected by the surface of the workpiece and returns to the quartz block 135 side forms a focus at a position off the core 131a of the optical fiber 131. As shown in FIG. 5, when the focus f2 of the reflected light L2 is formed on the clad 131b of the optical fiber 131, the reflected light L2 becomes clad mode light propagating through the clad 131b. In this case, it is possible to intentionally emit the reflected light L2, which has become clad mode light, from a predetermined place by providing, for example, a clad mode stripper, so that it is possible to dissipate heat by an appropriate method. Thus, it is possible to prevent or reduce occurrence of an issue of heat generation due to the reflected light L2.

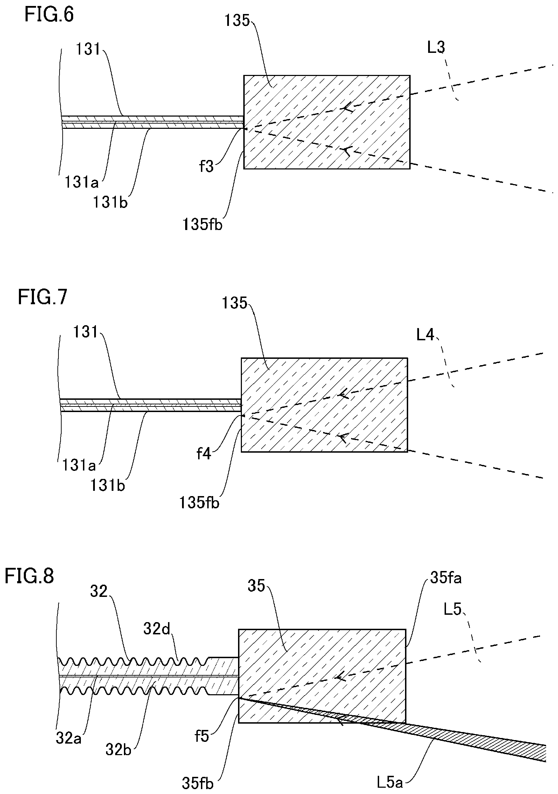

When the position of the focus of the reflected light is further deviated from the center of the optical fiber 131 and a focus f3 of the reflected light L3 is formed on a peripheral edge part of the optical fiber 131 as shown in FIG. 6 or when a focus f4 of the reflected light L4 is formed on a part, of the incidence surface 135fb of the quartz block 135, not in contact with the optical fiber 131 as shown in FIG. 7, the quartz block 135 is heated by the reflected light L3 or L4, and an issue may arise in which the characteristics of the laser device may be deteriorated, for example.

On the other hand, in the optical device 30, the second fiber 32 is provided between the first fiber 31 and the quartz block 35. The end face 32fa of the second fiber 32 connected to the quartz block 35 is larger than the end face 31fa of the first fiber 31 as described above. Therefore, compared with the conventional laser device, the laser light emitted from the laser device 1 and reflected on the surface of the workpiece can be more easily made to enter the optical fiber (the second fiber 32). As a result, it is possible to prevent or reduce heating of the quartz block 35 by the reflected light. Thus, it is possible to prevent or reduce deterioration of the characteristics of the laser device 1 due to heating of the quartz block 35.

From the viewpoint of making the reflected light enter the optical fiber as described above, it can be considered that the optical fiber 131 may be made thicker in the conventional optical device. However, if the optical fiber 131 is made thicker, handling thereof is very difficult. According to the above optical device 30, the first fiber 31 can be formed thin. Thus, it is possible to prevent or reduce sacrificing easy handling, and at the same time, to prevent or reduce degradation of the characteristics of the laser device 1 due to heating caused by the reflected light, by making the reflected light enter the second fiber 32 as described above.

Further, from the viewpoint of making more reflected light enter the second fiber 32, it is preferable that the second fiber 32 is connected on the incidence surface 35fb of the quartz block 35 to cover entirely an area which the reflected light can enter without being reflected by the side surface of the quartz block 35. However, the incidence surface 35fb of the quartz block 35 has an area which the reflected light hardly enters. FIG. 8 is a diagram schematically showing a cross-sectional view of the quartz block 35 provided in the optical device 30 according to the present embodiment and a part of the second fiber 32 connected to the quartz block 35, and an optical path example of the reflected light. As shown in FIG. 8, the reflected light L5 enters the quartz block 35 such that the position of focus f5 largely deviates from the center of the incidence surface 35fb of the quartz block 35. A part L5a of the reflected light L5 represented by hatching hardly enters the emission surface 35fa of the quartz block 35. As described above, when the incident position of the reflected light is away from the center of the incidence surface 35fb by a predetermined distance, the amount of reflected light entering is smaller, and the amount of heat generated by the reflected light is thus reduced. Further, almost no reflected light enters in the vicinity of the outer circumference of the incidence surface 35fb. Therefore, the outer diameter of the second fiber 32 can be smaller than the outer diameter of the quartz block 35.

In the optical device 30, as described above, the clad 32b of the second fiber 32 is configured to be able to emit the clad mode light through the outer peripheral surface. Therefore, the reflected light entering the clad 32b of the second fiber 32 can be intentionally is emitted through the outer peripheral surface of the clad 32b of the second fiber 32. By thus the clad mode light being intentionally emitted at a predetermined position, it is easy to dissipate the heat due to the clad mode light by an appropriate method.

When the clad of the optical fiber is thick, it is necessary to propagate the light for a long distance in order to propagate the light entering the clad to the outer peripheral surface. Therefore, when the clad mode light is removed by the clad mode stripper provided on the outer peripheral surface of the clad, it is more difficult to remove the clad mode light in the case of a thick optical fiber than in the case of a thin optical fiber. Therefore, in the case of a thick optical fiber, it is considered that the clad mode stripper is formed for a long distance along the longitudinal direction. However, in the optical device 30, on the part such as the end faces other than the part in which the clad mode stripper is formed, the second fiber 32 is formed thicker than the first fiber, but the clad mode stripper is configured with grooves 32d which make the outer diameter of the second fiber 32 smaller. Therefore, since the outer diameter of the part of the second fiber 32 in which the grooves 32d are formed is smaller, it is possible to make the clad mode light emit outside the clad 32b equally to the case of using the optical fiber having a small outer diameter.

From the viewpoint of facilitating the emission of the clad mode light to the outside of the clad 32b, the outer diameter of the part, of the second fiber 32, having the smallest outer diameter is preferably smaller than the outer diameter of the first fiber 31. The end face 32fa of the second fiber 32 connected to the quartz block 35 is larger than the end face 31fa of the first fiber 31 as described above, so that a larger amount of reflected light can be entered into the optical fiber (the second fiber 32) than in the case where the first fiber 31 is directly connected to the quartz block 35. However, if the clad of the optical fiber is thick, it is difficult to make the clad mode light emit through the outer peripheral surface as described above. Accordingly, the end face 32fa of the second fiber 32 is larger than the end face 31fa of the first fiber 31, and the outer diameter of the second fiber 32 is partially smaller by the grooves 32d formed. Thus, the reflected light can be easily entered into the clad 32b of the second fiber 32, and the clad mode light can be made emit to the outside of the clad 32b of the second fiber 32 equally to the case where a thin optical fiber such as the first fiber 31 is directly connected to the quartz block 35.

In addition, in the above optical device 30, the part, of the end face 32fb of the second fiber 32, not in contact with the first fiber 31 is covered with the resin coated part 45. Since the end face 32fb of the second fiber 32 is covered with the resin as described above, it is possible to prevent or reduce contamination of the end face 32fb. Thus, it is possible to prevent the contamination which attaches to the end face 32fb from absorbing the clad mode light to heat. In addition, the resin coated part 45 is in contact with the first spacer 50. Thus the clad mode light (reflected light) can be transmitted to the first spacer 50 through the resin coated part 45. The clad mode light (reflected light) arrives at the part of the end face 32fb of the second fiber 32, with which the first fiber 31 is not in contact. Here, in the case where the first spacer 50 is a member that absorbs light having the same wavelength as that of the light propagating through the second fiber 32, the clad mode light transmitted through the resin coated part 45 as described above can be converted into heat by the first spacer 50. Further, the first spacer 50 is in contact with the housing 40. Thus, it is also possible to conduct to the housing 40 the heat generated by the above conversion of the clad mode light and to discharge the heat to the outside. To make the resin coated part 45 durable in such a use, silicone resin having excellent heat resistance is preferably used for the resin coated part 45.

As described above, the reflected light entering the clad 32b of the second fiber 32 is emitted outside the clad 32b by the clad mode stripper, which is composed of the plurality of grooves 32d, or the resin coated part 45. At this time, since the clad 32b is formed thick, the energy density of the clad mode light is reduced, so that the clad mode light can be efficiently handled. Further, since the outer diameter is thinner in order from the quartz block 35 to the second fiber 32 and the first fiber 31, the reflected light entering the quartz block 35 can be handled in stages while the power density of the reflected light is being dispersed. Further, since the quartz block 35, the second fiber 32, and the first fiber 31 are connected in sequence by fusion splicing, the differences between the outer diameters of the members to be connected are smaller. Thus, the differences between the heat capacities when the members are fusion-spliced can be smaller. As a result, it is possible to prevent or reduce bending of the cores of the first fiber 31 and the second fiber 32 when the first fiber 31 and the second fiber 32 are fusion-spliced. Thus, it is possible to prevent or reduce deterioration of beam quality due to the bending of the cores of the first fiber 31 and the second fiber 32.

The present invention has been described by way of examples of the above embodiment. However, the present invention is not limited to these examples.

For example, in the above embodiment, the example that the clad mode stripper is formed from the plurality of grooves 32d along the circumferential direction is shown. However, the form of the clad mode stripper, which makes the clad mode light emit to the outside of the clad, is not limited this example. In the case where the clad mode stripper is formed from grooves in the outer peripheral surface of the clad 32b, the grooves only have to extend in a direction not parallel to the longitudinal direction and may extend in a spiral shape, for example. In addition, the clad mode stripper may be made by roughening the surface of the clad 32b. Further, at least a part of the outer peripheral surface of the clad 32b may be coated with a high refractive index layer having a higher refractive index than the clad 32b, so that the high refractive index layer can be the clad mode stripper. Since the clad 32b of the second fiber 32 is covered with the high refractive index layer, the clad mode light easily enters the high refractive index layer so that the clad mode light can be easily emitted to the outside of the clad 32b through the high refractive index layer. However, in the present invention, the clad mode stripper is not an essential component.

In the above embodiment, the aspect including the resin coated part 45 is described as an example, but the resin coated part 45 is not an essential component.

In the above embodiment, the example is described in which the first fiber 31 and the second fiber 32 are separately formed and connected. However, the first fiber 31 and the second fiber 32 may be integrally formed. In the case where the first fiber 31 and the second fiber 32 are integrally formed, for example, the end part of the second fiber 32 can be covered with a quartz tube to enlarge the outer diameter, and thus the end part of the second fiber 32 can be used as the first fiber 31.

As described above, the present invention provides an optical device which can prevent or reduce deterioration of characteristics due to reflected light in a laser device, and the present invention is expected to be used in the fields of processing machines, medical laser devices, and the like.

### Reference Signs List

- 1 ...: laser device
- 10 ...: light source
- 20 ...: optical combiner
- 30 ...: optical device
- 31 ...: first fiber
- 32 ...: second fiber
- 35 ...: quartz block
- 40 ...: housing
- 45 ...: resin coated part

## Claims

1. An optical device comprising:
a first fiber having a core and a clad surrounding an outer periphery of the core; and
a second fiber having a core and a clad surrounding an outer periphery of the core, wherein one end face of the first fiber is connected to one end face of the second fiber; and
a quartz block connected to another end face of the second fiber,
wherein the other end face of the second fiber is smaller than a surface of the quartz block, to which the second fiber is connected, and is larger than the one end face of the first fiber.

2. The optical device according to claim 1, wherein the second fiber causes light propagating through the clad of the second fiber to emit through an outer peripheral surface of the clad of the second fiber.

3. The optical device according to claim 2, wherein the clad of the second fiber has on the outer peripheral surface a groove extending not parallel to a longitudinal direction of the second fiber.

4. The optical device according to claim 3, wherein an outer diameter of a part of the clad of the second fiber, in which the groove is formed, is smaller than an outer diameter of the clad of the first fiber.

5. The optical device according to any one of claims 2 to 4, wherein at least a part of the outer peripheral surface of the clad of the second fiber is covered with a high refractive index layer having a refractive index higher than a refractive index of the clad of the second fiber.

6. The optical device according to any one of claims 1 to 5, wherein the one end face of the second fiber is larger than the one end face of the first fiber,
a part, of the one end face of the second fiber, not in contact with the first fiber, is covered with resin which transmits at least light having a same wavelength as that of light propagating through the second fiber, and
the resin is in contact with a member which absorbs light having the same wavelength as that of the light propagating through the second fiber.

7. A laser device comprising:
at least one light source;
an optical fiber which propagates light emitted from the light source; and
the optical device according to any one of claims 1 to 6 provided at an emission end of the optical fiber.
